# EUROPÄISCHE PATENTANMELDUNG

(11) **EP 2 478 994 A1**
(43) Veröffentlichungstag der Anmeldung: **25.07.2012**
(21) Anmeldenummer: 11194312.2
(22) Anmeldetag: 19.12.2011
(51) Int. Cl.: B23P 19/08, B25B 27/00, F16J 15/32

(54) **Verfahren zur Montage einer Wälzlageranordnung und Montagewerkzeug einschließlich eines Schubwerkzeugs zur Durchführung des Verfahrens**

(30) Priorität: 21.01.2011 DE 102011009172
(71) Anmelder: Pierburg GmbH, 41460 Neuss (DE)
(72) Erfinder: Osinski, Horst, 13355 Berlin (DE)
(74) Vertreter: Patentanwälte ter Smitten Eberlein Rütten Partnerschaftsgesellschaft

(57) **Zusammenfassung**

Die Erfindung bezieht sich auf ein Verfahren zur Montage einer Wälzlageranordnung (10) auf einer zylindrischen Zielwelle (14) mit Hilfe eines Montagewerkzeugs (12).

Die Wälzlageranordnung (10) weist ein Wälzlager (34) und mindestens einen Lagerdichtring (30,31) an einem Axialende des Wälzlager (34) auf, der spielfrei auf der Zielwelle (14) montiert wird. Das Montagewerkzeug (12) weist ein Schubwerkzeug (17) auf, das einen Schubrings (20) und mehrere aus der Schubring-Öffnung (21) im wesentlichen axial herausragende Spreizzungen (22) aufweist.

Das Verfahren besteht aus folgenden Verfahrensschritten:
axiales Ansetzen des Schubrings (20) an die Wälzlageranordnung (10),
wobei der Lagerdichtring (30,31) dem Schubring (20) zugewandt ist und
die Spreizzungen (92) in den Lagerdichtring (30,31) hineinragen,
axiales Einschieben der Zielwelle (14) in das Schubwerkzeug (17) und in die Wälzlageranordnung (10), und
Entfernen des Schubwerkzeugs (17) von der Zielwelle (14).

## Beschreibung

Die Erfindung bezieht sich auf ein Verfahren zur Montage einer Wälzlageranordnung, die ein Wälzlager und mindestens einen Lagerdichtring aufweist, auf einer zylindrischen Zielwelle mit Hilfe eines Montagewerkzeugs sowie auf ein Montagewerkzeug einschließlich einer Werkzeugwelle und eines Schubwerkzeugs zur Durchführung des Verfahrens.

Die Montage einer Wälzlageranordnung mit einem Dichtring ist problematisch, da der Dichtring beim Aufschieben auf die Zielwelle unerwünschterweise umgekrempelt werden kann, und dann seiner Dichtungsfunktion dann nicht mehr nachkommt. Die Gefahr des Umkrempelns ist umso größer, je fester der Dichtring nach seiner Montage auf der Zielwelle sitzen soll. Bei den bekannten Verfahren und Montagewerkzeugen wird der Dichtring auf irgendeine Weise aufgeweitet, in dem aufgeweiteten Zustand auf der Zielwelle in die Zielposition gebracht und die Aufweitung beendet.

Aus DE 10 2006 044 747 B3 ist ein Verfahren und eine Vorrichtung zur Montage von außen liegenden Lagerdichtringen bekannt, bei dem der Lagerdichtring mit einem Kegel aufgeweitet wird, um dann in der gewünschten Ziel position auf der Zielwelle positioniert zu werden. Hierbei kann es jedoch zum Umkrempeln des Lagerdichtrings kommen, da der Lagerdichtring beim axialen Verschieben auf der Zielwelle unmittelbar auf der Zielwelle aufliegt.

Um dies zu vermeiden, werden Lagerdichtringe auch unter leichter Rotation auf der Zielwelle angeordnet. Auch hier kann ein Umkrempeln des Lagerdichtrings während der axialen Bewegung auf der Zielwelle nicht vollständig ausgeschlossen werden.

Aufgabe der Erfindung ist es, ein Montage-Verfahren und ein Montagewerkzeug zu schaffen, bei dem ein Umkrempeln eines Lagerdichtrings praktisch ausgeschlossen wird.

Diese Aufgabe wird erfindungsgemäß gelöst durch ein Verfahren gemäß Anspruch 1 beziehungsweise durch ein Montagewerkzeug gemäß Anspruch 4.

Bei der auf der Zielwelle zu montierenden Wälzlageranordnung handelt es sich um ein Wälzlager, das an einem oder beiden Axialenden einen oder mehrere Lagerdichtringe aufweist, die den Ringspalt zwischen dem Wälzlager und der Zielwelle axial abdichten, um im Betrieb insbesondere den Austritt des Lager-Schmiermittels zu verhindern. Hierzu muss jeder Lagerdichtring mit seinem Innenumfang spielfrei und daher unter Vorspannung auf der Zielwelle aufliegen, um eine dauerhafte schmiermitteldichte Abdichtung der Grenzfläche bzw. -linie zwischen dem Lagerdichtring und der Zielwelle zu schaffen.

Das Montagewerkzeug weist ein Schubwerkzeugs auf, das einen Schubring und mehrere aus der Schubring-Öffnung axial herausragende Spreizzungen aufweist. Die Spreizzungen verlaufen in Draufsicht axial, liegen also jeweils in einer Längsebene, liegen in Längsrichtung jedoch nicht notwendigerweise in konstantem Abstand zur Axialen. Die Spreizzungen spannen dabei also einen Konus auf, der sich distal verjüngt. Der Innendurchmesser der Spreizzungen in der Schubring-Öffnung ist höchstens geringfügig größer als der Außendurchmesser der Zielwelle, so dass der Schubring einschließlich seiner Spreizzungen auf der der Zielwelle verschoben werden kann.

Gemäß dem Verfahren ist zunächst das axiale Ansetzen des Schubrings an die Wälzlageranordnung vorgesehen, wobei der Lagerdichtring dem Schubring zugewandt ist und die Spreizzungen in die Öffnung des Lagerdichtrings hineinragen. Hierbei können, müssen jedoch nicht, die Spreizzungen durch den Lagerdichtring radial nach innen gebeugt werden, wodurch sich der Konuswinkel des von den Spreizzungen aufgespannten Konus vergrößert.

Anschließend wird die Zielwelle in das Schubwerkzeug und in die angekoppelte Wälziageranordnung eingeschoben, so dass die Zielwelle die Spreizzungen derart aufweitet, dass diese schließlich auf der zylindrischen Zielwelle aufliegen und den Lagerdichtring von der Werkzeugwelle beabstandet halten. Hierbei bilden die über den Umfang gleichmäßig verteilten Spreizzungen einen Schlitten für den Lagerdichtring, so dass der Lagerdichtring beim Verschieben nicht unmittelbar auf der Zielwelle aufliegt. Die Wälzlageranordnung kann nun mit Hilfe des Schubwerkzeugs auf der Zielwelle verschoben werden, bis die Ziel position der Wälzlager Anordnung auf der Zielwelle erreicht ist.

Schließlich wird das Schubwerkzeug einschließlich des Schubrings und der Spreizzungen von der Zielwelle abgezogen. Hierbei werden die Spreizzungen aus dem Zwischenraum zwischen dem Lagerdichtring und der Zielwelle herausgezogen. Sobald die Spreizzungen entfernt sind, liegt der Lagerdichtring unmittelbar auf der Zielwelle auf. Ein Umkrempeln während des Aufschiebens der Wälzlageranordnung auf die Zielwelle ist ausgeschlossen.

Vorzugsweise zählt zum Montagewerkzeug eine Werkzeugwelle, die den gleichen Außendurchmesser wie die Zielwelle hat. Zu Beginn der Montage wird zunächst die Werkzeugwelle in das Schubwerkzeug und die angekoppelte Wälzlageranordnung derart eingeschoben, dass die Werkzeugwelle die Spreizzungen derart aufweitet, dass diese schließlich auf der zylindrischen Werkzeugwelle liegen und den Lagerdichtring von der Werkzeugwelle beabstandet halten.

Erst anschließend wird die Zielwelle an die Werkzeugwelle angesetzt, so dass die Werkzeugwelle unmittelbar angrenzt an die Zielwelle und zwischen der Zielwelle und der Werkzeugwelle ein stufenloser und spaltloser Übergang entsteht. Dann wird die Wälzlageranordnung von der Werkzeugwelle zu der Zielwelle hin mit Hilfe des Schubwerkzeugs verschoben. Hierbei bilden die über den Umfang gleichmäßig verteilten Spreizzungen einen Schlitten für den Lagerdichtring, so dass der Lagerdichtring beim Verschieben nicht unmittelbar auf der Werkzeugwelle beziehungsweise der Zielwelle aufliegt.

Schließlich wird die Werkzeugwelle entfernt und wird das Schubwerkzeugs einschließlich des Schubrings und der Spreizzungen von der Zielwelle abgezogen. Hierbei werden die Spreizzungen aus dem Zwischenraum zwischen dem Lagerdichtring und der Zielwelle herausgezogen, während der Lagerdichtring von entsprechenden Rückhaltemitteln axial auf der Zielwelle fixiert ist. Sobald die Spreizzungen entfernt sind, liegt der Lagerdichtring unmittelbar auf der Zielwelle auf. Ein Umkrempeln während des Aufschiebens der Wälzlageranordnung auf die Zielwelle ist ausgeschlossen.

Gemäß einer bevorzugten Ausführungsform des Verfahrens ist ein separates Führungswerkzeug vorgesehen, das eine zylindrische und radial offene Lageraufnahme und eine zylindrische radial offene Wellenaufnahme aufweist. Die Lageraufnahme weist in ihrem zylindrischen Teil einen Innendurchmesser auf, der ungefähr dem Außendurchmesser der Wälzlageranordnung entspricht. Die zylindrische Wellenaufnahme weist einen Innendurchmesser auf, der ungefähr dem Außendurchmesser der Werkzeugwelle beziehungsweise der Zielwelle entspricht, so dass der Innendurchmesser der Lageraufnahme größer ist als der Innendurchmesser der Wellenaufnahme. Sowohl die Lageraufnahme als auch die Wellenaufnahme sind als Halbschalen ausgebildet und sind radial derart offen, dass die Wälzlageranordnung und die Zielwelle radial eingesetzt beziehungsweise entnommen werden können. Der

Öffnungswinkel kann beispielsweise 180° betragen. Es können auch zwei 180°-Führungswerkzeug-Halbschalen aufeinandergelegt werden, die zum Entfernen der Zielwelle mit der montierten Wälzlageranordnung radial voneinander getrennt werden. Das Führungswerkzeug dient der einfachen Fixierung der Wälzlageranordnung, der Werkzeugwelle und der Zielwelle,

Zunächst wird vor dem axialen Ansetzen des Schubrings die Wälzlageranordnung in die Lageraufnahme des Führungswerkzeugs eingesetzt. Anschließend wird die Werkzeugwelle in das Schubwerkzeug und in die Wälzlageranordnung eingeschoben, bis das vordere Ende der Werkzeugwelle ungefähr in der Mitte der Wellenaufnahme liegt. Anschließend wird die Zielwelle in die Wellenaufnahme des Führungswerkzeugs eingeschoben und dabei an das freie Ende der Werkzeugwelle derart angesetzt, dass ein stufenloser und spaltfreier Übergang zwischen der Werkzeugwelle und der Zielwelle entsteht.

Das erfindungsgemäße Montagewerkzeug weist ein Schubwerkzeug und gegebenenfalls eine Werkzeugwelle mit den vorbeschriebenen Merkmalen auf.

Gemäß einer bevorzugten Ausgestaltung ist das Schubwerkzeug zweiteilig ausgebildet, und besteht aus dem Schubring und einem separaten Klemmring, wobei die Spreizzungen zwischen dem Klemmring und dem Schubring verklemmt sind. Der Schubring liegt mit seiner Vorderseite axial unmittelbar an der Wälzlageranordnung an. Der Klemmring ist an der Rückseite des Schubrings fixiert, beispielsweise axial mit dem Schubring verschraubt. Hierbei werden die Spreizzungen beispielsweise in einem konischen Klemmspalt zwischen dem Schubring und dem Klemmring axial fixiert.

Vorzugsweise wird das Schubwerkzeug von zwei Halbschalen gebildet, die durch ein lösbares Haltemittel zusammengehalten werden und die zum Entfernen des Schubwerkzeug von der Zielwelle durch Lösen des Haltemittels voneinander getrennt werden können. Das Schubwerkzeug muss nach der Montage der Wälzlageranordnung auf der Zielwelle nicht mehr axial von der Zielwelle abgezogen werden, sondern die beiden das Schubwerkzeug bildenden Halbschalen werden nach Lösen bzw. Öffnen des Haltemittels radial von der Zielwelle abgenommen.

Vorzugsweise weist der Schubring einen Innenkonus zur radialen Führung der Spreizzungen auf, so dass die Spreizzungen vor dem Schubring beziehungsweise vor der Schubring-Öffnung einen sich verjüngenden Konus formen, Der Konuswinkel des Schubring-Innenkonus beträgt bevorzugt zwischen 4° und 24°, und beträgt besonders bevorzugt zwischen 7° und 18°. Als besonders vorteilhaft hat sich ein Konuswinkel von 10° bis 15° herausgestellt.

Vorzugsweise sind mindestens sechs Spreizzungen vorgesehen, die besonders bevorzugt von Federblechstreifen gebildet werden.

Gemäß einer bevorzugten Ausgestaltung weist der Schubring-Innenkonus axiale Führungsnuten zum Führen der Spreizzungen auf. Hierdurch werden die Spreizzungen axial fixiert, so dass diese nicht von der Axialen abweichen können, um eine Schraubenlinie zu beschreiben.

Vorzugsweise sind die Spreizzungen, bezogen auf eine Querebene, gewölbt ausgebildet, wobei die Wölbung besonders bevorzugt zirkulär und ungefähr mit dem Radius der Werkzeugwelle beziehungsweise der Zielwelle ausgestaltet ist. Hierdurch wird ein enges Anliegen der Spreizzungen an der Werkzeugwelle und der Zielwelle erreicht, und wird die Aufweitung des Lagerdichtrings minimiert.

Vorzugsweise weist die Werkzeugwelle einen Innenkonus und weist die Zielwelle einen korrespondierenden Außenkonus auf, so dass die Zielwelle mit der Werkzeugwelle beim Ansetzen der Zielwelle an die Werkzeugwelle selbstzentrierend zentriert wird.

Im Folgenden werden unter Bezugnahme auf die Zeichnungen zwei Ausführungsbeispiele der Erfindung näher erläutert.

Es zeigen:
- Figur 1: ein Schubwerkzeug eines Montagewerkzeugs einer ersten Ausführungsform im Längsschnitt, zur Montage einer Wälzlageranordnung auf einer Zielwelle, und
- Figuren 2-4: drei Verfahrensschritte zur Montage einer Wälzlaglaranordnung auf einer Zielwelle mit Hilfe eines Montagewerkzeugs in einer zweiten Ausführungsform in schematischen Längsschnitten.

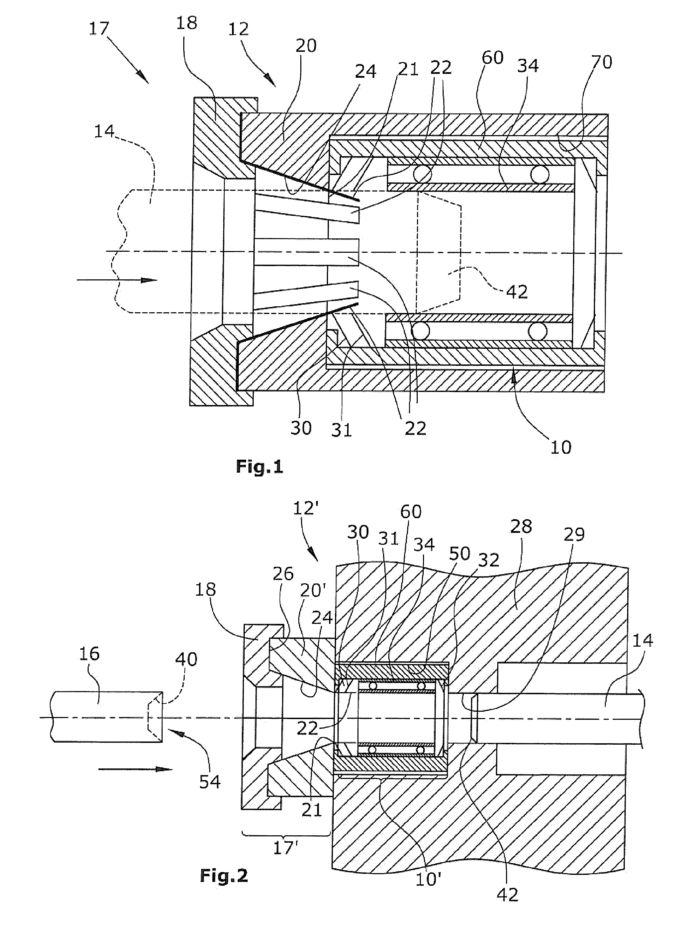

In der Figur 1 ist eine Montage-Anordnung dargestellt, die im Wesentlichen aus einer Wälzlageranordnung 10, einem Montagewerkzeug 12 und einer Zielwelle 14 besteht. Das Montagewerkzeug 12 dient der Montage der Wälzlageranordnung 10 auf der zylindrischen Zielwelle 14.

Die Wälzlageranordnung 10 besteht aus einem Wälzlager 34, das an einem Axialende zwei Lagerdichtringe 30,31 und an dem anderen Axialende einen weiteren Lagerdichtring 32 aufweist. Das Wälzlager 34 und die Lagerdichtringe 30-32 werden durch ein Gehäuse 60 der Wälzlageranordnung 10 zusammengehalten

Das Montagewerkzeug 12 besteht vorliegend ausschließlich aus dem Schubwerkzeug 17. Das Schubwerkzeug 17 besteht aus einem Schubring 20, einem Klemmring 18 und acht Spreizzungen 22, die einen Konus beschreibend axial aus einer Schubring-Öffnung 21 herausragen. Der Schubring 20 weist einen Innenkonus 24 auf, in dem die Spreizzungen 22 in entsprechenden axial verlaufenden Führungsnuten geführt sind. Die Spreizzungen 22 sind in einem ringscheibenförmigen Spalt zwischen dem Schubring 20 und dem Klemmring 18 eingeklemmt und auf diese Weise fixiert. Der Schubring 20 und der Klemmring 18 sind axial durch mehrere Schrauben miteinander verspannt.

Die Spreizzungen 22 werden von Federblechstreifen gebildet und sind im Querschnitt gewölbt ausgebildet, wobei der Innenradius der Wölbung der Spreizzungen 22 ungefähr dem Außenradius der Zielwelle 14 beziehungsweise der Werkzeugwelle 16 entspricht. Der Konuswinkel des Schubring-Innenkonus 24 und des von den Spreizzungen 22 beschriebenen Konus beträgt ungefähr 10°.

Der Schubring 20 weist ferner eine hohlzylindrische Wälzlager-Aufnahme 70 auf, in die mit geringem radialen Spiel die Wälzlageranordnung 10 axial einsetzbar ist. Die Wälzlageranordnung 10 wird auf diese Weise radial und in einer Richtung axial in dem Schubwerkzeug 17 fixiert.

Zur Montage der Wälzlageranordnung 10 auf der Zielwelle 14 wird zunächst die Wälzlageranordnung 10 in die Wälzlager-Aufnahme 70 des Schubwerkzeugs 17 axial bis zum Anschlag eingeschoben. Anschließend wird die Zielwelle 14 von der Seite des Klemmrings 18 aus in das Schubwerkzeug 17 eingeschoben. Hierbei werden die Spreizzungen 22 auf den Außendurchmesser der Zielwelle 14 aufgespreizt und beabstanden auf diese Weise die Lagerdichtringe 30,31 und die Zielwelle 14 radial voneinander. Ein unmittelbares Aufliegen der Dichtringe 30,31 auf der Zielwelle 14 wird hierdurch in dieser Phase vollständig vermieden, wodurch wiederum ein Umkrempeln der Lagerdichtringe 30-32 beim Verschieben der Zielwelle im Verhältnis zu der Wälzlageranordnung 10 verhindert wird.

Sobald die Wälzlageranordnung 10 ihre axiale Zielposition auf der Zielwelle 14 erreicht hat, kann das Schubwerkzeug 17 von der Zielwelle 14 wieder abgezogen werden, wobei die Spreizzungen 22 aus dem Ringspalt zwischen den Dichtringen 30, 31 und der Zielwelle 14 axial herausgezogen werden, so dass die vorgespannten Dichtringe 30, 31 dann unmittelbar auf der Zielwelle 14 aufliegen.

In den Figuren 2-4 ist eine zweite Ausführungsform einer Montage-Anordnung dargestellt, die im Wesentlichen aus einer Wälzlageranordnung 10', einem aus mehreren Elementen bestehenden Montagewerkzeug 12' und einer Zielwelle 14 besteht. Das Montagewerkzeug 12' dient der Montage der Wälzlageranordnung 10 auf der zylindrischen Zielwelle 14. Die Zielwelle 14 weist bereits eine montierte Wälzlageranordnung 10 auf. Auf die Zielwelle 14 soll nun eine zweite Wälzlageranordnung 10' montiert werden. Die zweite Wälzlageranordnung 10' entspricht technisch im Wesentlichen der Wälzlageranordnung 10 der Figur 1.

Zum Montagewerkzeug 12' zählen eine zylindrische Werkzeugwelle 16, die den gleichen Außendurchmesser aufweist wie die Zielwelle 14, ein Schubwerkzeug 17' und ein Führungswerkzeug 28. Das Schubwerkzeug 17' besteht aus einem Schubring 20', einem kleinen Ring 18 und acht Spreizzungen 22, die einen Konus beschreibend aus einer Schubring-Öffnung 21 herausragen.

Das Führungswerkzeug 28 weist eine zylindrische und radial offene Lageraufnahme 50 und eine zylindrische und radial offene Wellenaufnahme 29 auf. Der Öffnungswinkel der Lageraufnahme 50 und der Wellenaufnahme 29 beträgt 180°, so dass die Wälzlageranordnung 10 und die Zielwelle 14 jeweils radial aus dem Führungswerkzeug 28 entnommen werden können.

Die Werkzeugwelle 16 weist an ihrem der Zielwelle 14 zugewandten Ende 54 einen Innenkonus 40 auf, der mit einem entsprechenden Außenkonus 42 der Zielwelle 14 korrespondiert, so dass die Zielwelle 14 und die Werkzeugwelle 16 sich zueinander zentrieren, wenn sie axial zusammengeführt werden.

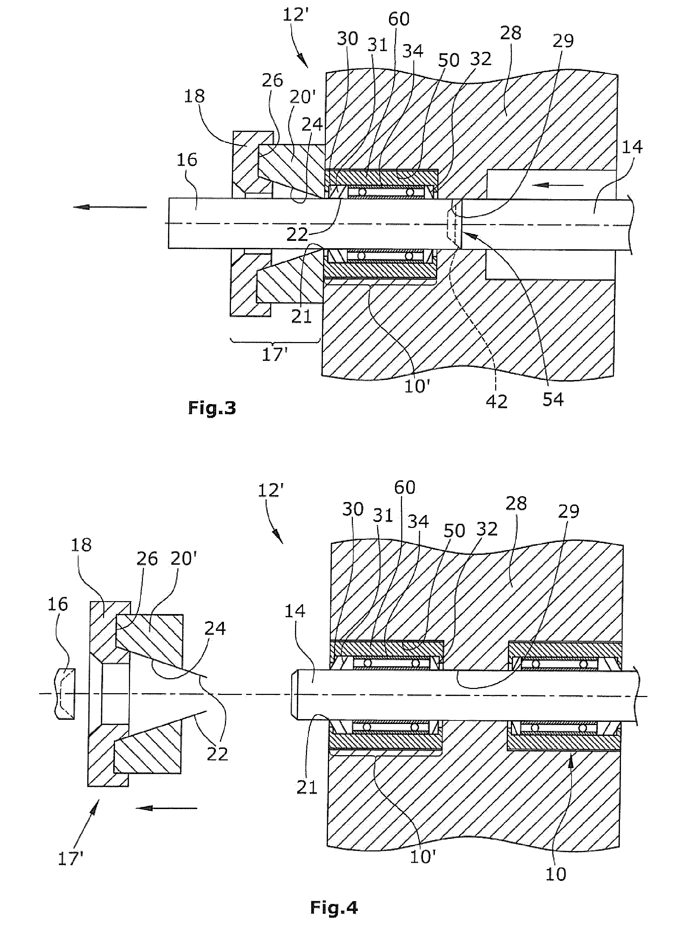

Die Herstellungs-Verfahrensschritte sind in den Figuren 2 bis 4 zusammengefasst dargestellt. Zunächst wird die Wälzlageranordnung 10' in die Lageraufnahme 50 des Führungswerkzeugs 28 radial eingesetzt. Anschließend wird der Schubring 20' des Schubwerkzeugs 17' mit seiner Stirnseite an die entsprechende Stirnseite der Wälzlageranordnung 10' angesetzt, wobei die Spreizzungen 22 in die Öffnungen der beiden Lagerdichtringe 30,31 hineinragen. Anschließend wird die Werkzeugwelle 16 axial in das Schubwerkzeug 17' und in die Wälzlageranordnung 10' eingeschoben (Fig. 2), wobei das Axialende 54 der Werkzeugwelle 16 bis ungefähr zu der axialen Mitte der zylindrischen Wellenaufnahme 29 geschoben wird. Anschließend wird von der anderen Seite aus die Zielwelle 14 in die Wellenaufnahme 29 eingeschoben, bis die Zielwelle 14 an die Werkzeugwelle 16 ungefähr in der Mitte der Wellenaufnahme 29 anstößt, das heißt, an die Werkzeugwelle 16 angesetzt wird (Fig. 3). Anschließend wird die Zielwelle 14 weiter vorgeschoben, so dass die Zielwelle 14 die Werkzeugwelle 16 aus der Wälzlageranordnung 10' und schließlich auch aus dem Schubwerkzeug 17' herausschiebt, wobei die Spreizzungen 22 für die Lagerdichtringe 30,31 als Schlitten wirken und ein Umkrempeln der Lagerdichtringe 30,31 zuverlässig verhindern.

Wenn durch das Verschieben der Zielwelle 14 die Wälzlageranordnung 10' ihre Endposition auf der Zielwelle 14 erreicht hat, wird das Schubwerkzeug 17' von der Zielwelle 14 beziehungsweise der Wälzlageranordnung 10' axial abgezogen, so dass die Lagerdichtringe 30,31 mit ihrem Innenumfang unmittelbar auf der Zielwelle 14 aufliegen.

Das Schubwerkzeug 17, 17' kann zweiteilig aus zwei Halbschalen bestehend ausgebildet sein, um das Schubwerkzeug 17, 17' nach der Montage der Wälzlageranordnung radial von der Zielwelle 14 abnehmen zu können.

## Patentansprüche

1. Verfahren zur Montage einer Wälzlageranordnung (10) auf einer zylindrischen Zielwelle (14) mit Hilfe eines Montagewerkzeugs (12), wobei
die Wälzlageranordnung (10) ein Wälzlager (34) und mindestens einen Lagerdichtring (30,31) an einem Axialende des Wälzlagers (34) aufweist, der spielfrei auf der Zielwelle (14) montiert wird, und
das Montagewerkzeug (12) ein Schubwerkzeug (17) aufweist, das einen Schubring (20) und mehrere aus der Schubring-Öffnung (21) konisch-axial herausragende Spreizzungen (22) aufweist,
mit den Verfahrensschritten:
axiales Ansetzen des Schubrings (20) an die Wälzlageranordnung (10), wobei der Lagerdichtring (30,31) dem Schubring (20) zugewandt ist und die Spreizzungen (92) in den Lagerdichtring (30,31) hineinragen,
axiales Einschieben der Zielwelle (14) in das Schubwerkzeug (17) und in die Wälzlageranordnung (10), und
Entfernen des Schubwerkzeugs (17) von der Zielwelle (14).

2. Verfahren zur Montage einer Wälzlageranordnung (10) nach Anspruch 1, wobei das Montagewerkzeug eine Werkzeugwelle (16) aufweist, die den gleichen Außendurchmesser wie die Zielwelle (14) hat, mit den Verfahrensschritten:
vor dem Einschieben der Zielwelle (14): Einschieben der Werkzeugwelle (16) in das Schubwerkzeug (17) und in die Wälzlageranordnung (10) und axiales Ansetzen der Zielwelle (14) an die Werkzeugwelle (16),
axiales Verschieben der Wälzlageranordnung (10) von der Werkzeugwelle (16) zu der Zielwelle (14) mit Hilfe des Schubwerkzeugs (17), wodurch die Zielwelle (14) in das Schubwerkzeug (17) und in die Wälzlageranordnung (10) eingeschoben wird, und
vor dem Entfernen des Schubwerkzeugs: Entfernen der Werkzeugwelle (16).

3. Verfahren zur Montage einer Wälzlageranordnung (10) nach Anspruch 2, wobei ein Führungswerkzeug (28) vorgesehen ist, das eine zylindrische radial zugängliche Lageraufnahme (50) und eine zylindrische radial zugängliche Wellenaufnahme (29) aufweist, mit den Verfahrensschritten:
Einsetzen der Wälzlageranordnung (10) in die Lageraufnahme (50) vor dem axialen Ansetzen des Schubrings (20),
Einschieben der Werkzeugwelle (16) bis das vordere Ende (54) der Werkzeugwelle (16) in der Wellenaufnahme (29) liegt, und
axiales Ansetzen der Zielwelle (14) in der Wellenaufnahme (29).

4. Montagewerkzeug (12) für das Verfahren nach einem der vorangegangenen Ansprüche.

5. Montagewerkzeug (12) nach Anspruch 4, wobei das Schubwerkzeug (17) zweiteilig ausgebildet ist, und aus dem Schubring (20) und einem Klemmring (18) besteht, wobei die Spreizzungen (22)
zwischen dem Klemmring (18) und dem Schubring (20) verklemmt sind.

6. Montagewerkzeug (12) nach Anspruch 4 oder 5, wobei das Schubwerkzeug (17) von zwei Halbschalen gebildet wird, die durch ein lösbares Haltemittel zusammengehalten werden und zum Entfernen des Schubwerkzeugs (17) von der Zielwelle (14) durch Lösen des Haltemittels voneinander getrennt werden können.

7. Montagewerkzeug (12) nach einem der Ansprüche 4-6, wobei der Schubring (20) einen Innenkonus (24) zur radialen Führung der Spreizzungen (22) aufweist, so dass die Spreizzungen (22) vor dem Schubring (20) einen sich verjüngenden Konus formen.

8. Montagewerkzeug (12) nach Anspruch 3, wobei die Werkzeugwelle (16) einen Innenkonus (40) und die Zielwelle (14) einen Außenkonus (42) zur Zentrierung aufweist.

9. Montagewerkzeug (12) nach einem der Ansprüche 4-8, wobei der Konuswinkel des Schubring- Innenkonus (24) zwischen 4° und 25°, bevorzugt zwischen 7° und 18° beträgt.

10. Montagewerkzeug (12) nach einem der Ansprüche 3-7, wobei mindestens sechs Spreizzungen (22) vorgesehen sind, die von Federblechstreifen gebildet werden.

11. Montagewerkzeug (12) nach einem der Ansprüche 3-8, wobei der Schubring-Innenkonus (24) axiale Führungsnuten zum Führen der Spreizzungen (22) aufweist.

12. Montagewerkzeug (12) nach einem der Ansprüche 3-9, wobei die Spreizzungen (22) in Längsrichtung gewölbt ausgebildet sind.

13. Montagewerkzeug (12) nach Anspruch 10, mit dem Führungswerkzeug (28) nach Anspruch 3.
